Europäisches Patentamt

European Patent Office

Office européen des brevets

(19)

(11) Publication number: **0 080 268**
**B1**

(12)

# EUROPEAN PATENT SPECIFICATION

(45) Date of publication of patent specification: **12.02.86**

(51) Int. Cl.⁴: **D 06 F 58/28**

(21) Application number: **82305673.4**

(22) Date of filing: **26.10.82**

(54) **Tumbler dryers.**

(30) Priority: **28.10.81 GB 8132533**

(43) Date of publication of application:
**01.06.83 Bulletin 83/22**

(45) Publication of the grant of the patent:
**12.02.86 Bulletin 86/07**

(84) Designated Contracting States:
**DE FR IT NL**

(56) References cited:
**DE-A-1 585 980**
**US-A-3 822 482**
**US-A-4 275 508**

(73) Proprietor: **T.I. Domestic Appliances Limited**
**Radiation House North Circular Road**
**London NW10 0JP (GB)**

(72) Inventor: **Davies, John Garfield**
**The Rocks 22 Milford Lane**
**Limpley Stoke Bath (GB)**

(74) Representative: **Pike, Harold John et al**
**Abel & Imray Northumberland House 303-306**
**High Holborn**
**London, WC1V 7LH (GB)**

Courier Press, Leamington Spa, England.

EP 0 080 268 B1

## Description

This invention relates to tumbler dryers and in particular to tumbler dryers having a dryer drum which during operation has periods of rotation in opposite directions so that the articles being dried do not tend to form into a roll or ball and the drying of the articles is more effective.

Hitherto, in order to drive the drum of a tumbler dryer in opposite directions, it has been proposed to use capacitor-start and run induction motors in conjunction with a switch for reversing the supply to the start winding so that the motor can be started in either direction depending on the particular direction required by the motor control program at the time. Capacitor start and run motors are relatively expensive as compared with split-phase motors which are reversible motors capable of being started and run in either clockwise or anti-clockwise directions of rotation. However, it has generally been assumed that split phase motors cannot be run as reversing motors where reversals of direction of rotation are relatively frequent without reinforcing the start winding, i.e. by providing extra turns or by using heavier gauge wire, and if this is done, the cost of the motor increases and the benefit of low cost is lost.

Nevertheless, there have been proposals for the use of split-phase motors in tumblers dryers, in which the need to reinforce the start winding is overcome by providing an arrangement for bringing the motor to rest before a reversal in the direction of rotation is effected (British Patent Specification No. 1 495 936). However the control mechanisms provided to achieve this have not proved entirely satisfactory and capacitor-start and run motors have remained the most commonly used type of motor in tumbler dryers.

It is the object of the present invention to make it a practical proposition to use a split phase induction motor to drive the clothes drum of a tumbler dryer in opposite rotational directions in accordance with a required program. This object is achieved by providing an independently-driven timing mechanism to control reversal of the drum.

According to the present invention, there is provided a tumble dryer including rotatable drum which is driven in opposite rotational directions alternately for periods of time by a split phase induction motor having a main winding and a starting winding with a starting switch having contacts for connecting the starting winding in parallel with the main winding and disconnecting it only when the motor approaches its full running speed, a timing mechanism driven independently of the drum for determining the said periods of time and including switching means operable by the timing mechanism for reversing the sense of connection of one of said windings relatively to the other, and means operable by the timing mechanism for de-energising the main winding between reversals of the direction of connection for a period of time sufficient for the motor to come substantially to rest.

The de-energising means may comprise an ON/OFF switch operable by the timing mechanism. In that case, the switching means may be operable to effect reversal of the sense of connection of starting winding. Additionally, the timing mechanism may be such that the ON/OFF switch is operable to an "OFF" position while the motor is running, reversal of the sense of connection of the starting winding also occurring whilst the motor is running.

Alternatively, the switching means may be operable to reverse the sense of connection of the main winding and in this case the means comprises an arrangement for introducing a time delay between reversals of the direction of connection.

In one embodiment of the invention, the timing mechanism includes a first switching means operable by the mechanism to permit energisation of the motor during the periods of time that the motor is required to run and to prevent energisation during intervals between those periods, the intervals being long enough to allow the motor to come substantially to rest, and second switching means operable by the mechanism to reverse the sense of connection of one of the windings relatively to the other in such manner that the motor is started in opposite directions alternately.

In the embodiment just referred to, the timing mechanism may be operable to reverse the sense of connection of the starting winding and effects such reversal whilst the motor is running at full speed.

The timing mechanism may include cams for operating the first and second switching means.

In another embodiment, the first and second switching means comprises a multi-position switch having a first position in which the main winding is connected in one sense with the starting winding, a second position in which the main winding is connected in the reverse sense with the starting winding, and an intermediate position in which the main winding is disconnected from the starting winding and energisation of the main winding prevented.

In order that the invention may be fully understood and readily carried into effect, embodiments thereof will now be described with reference to the accompanying drawings of which:—

Fig. 1 is a circuit diagram showing the connections of the induction motor to electricity supply terminals,

Fig. 2 is a timing diagram to be used in explaining the operation of the circuit of Fig. 1,

Fig. 3 is a circuit diagram showing an alternative method of connecting the induction motor to electricity supply terminals, and

Fig. 4 is a timing diagram to be used in explaining the operation of the circuit of Fig. 3.

The tumbler dryer embodying the invention may take any one of a number of conventional designs and includes a drum into which articles to be dried are loaded at the commencement of a drying cycle and to which hot air is supplied. The drum is rotated during the drying cycle by a split phase reversing induction motor which also drives an impeller that supplies air via an air heater to the drum.

The duration of a drying cycle may be controlled by a timer forming part of the timing mechanism and preset by a user before the commencement of a cycle to the required cycle time. Alternatively, some other form of control responsive to a condition of the article to be dried or to some other variable representative of that condition may be used.

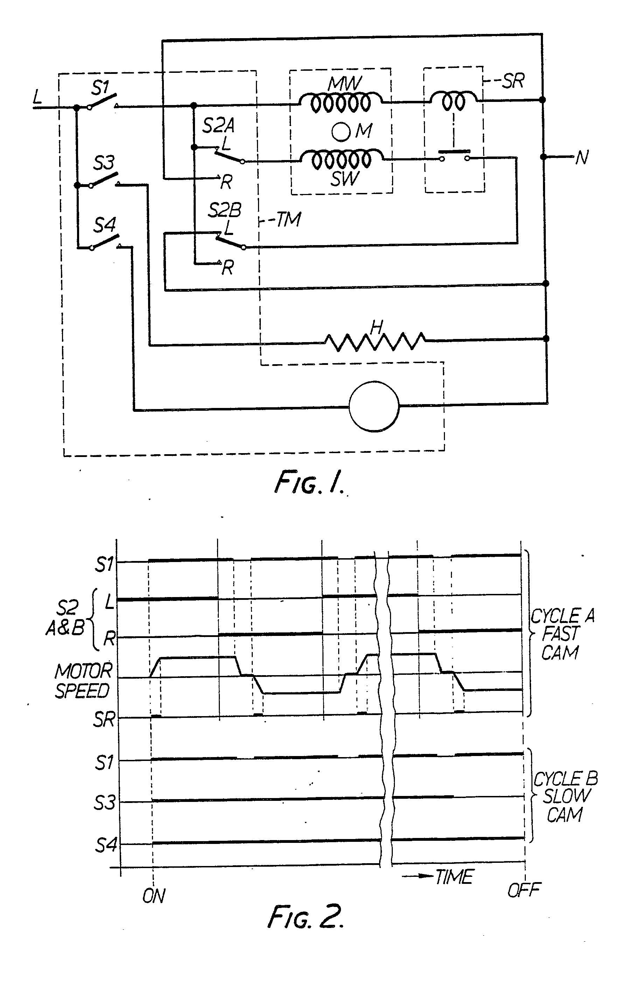

Referring now to Fig. 1, the split phase induction motor M has a main winding MW and a conventional, i.e. non-reinforced, starting winding SW. One end terminal of the winding MW is connected to one terminal of a timing mechanism shown enclosed within the dotted area TM and which controls the duration of the time periods during which the motor M runs in one direction or the other. The one terminal is connected via an ON/OFF switch S1 of the mechanism TM to an A.C. electrical power supply input terminal L. The other end terminal of the winding MW is connected through the solenoid coil of a starting relay SR to the other A.C. electrical power supply input terminals N. The starting winding SW of the motor M is connected to the moving contacts of a further switch S2A and via the contacts of the starting relay SR to the moving contact of a further switch S2B which also form part of the timing mechanism TM. The moving contacts of the switches S2A and S2B are operated together and have associated fixed contacts L and R. The fixed contact L of switch S2A and the contact R of switch S2B are connected together and to the terminal of the mechanism TM to which the first-mentioned end terminals of the main winding MW is connected. The fixed contact R of the switch S2A and the fixed contact L of the switch S2B are also connected together and to the terminal N of the supply.

Consideration of Fig. 1 will reveal that the switch S1 controls the application of the A.C. supply to the motor M, and the switches S2A and S2B together serve to reverse the sense of connection of the starting winding SW with respect to the main winding MW. The starting relay SR serves to disconnect the supply to the starting winding SW when the current through the main winding MW falls as the motor M approaches its normal running speed.

The timing mechanism TM includes two further switches S3 and S4 connected as shown to control, respectively, the energisation of the heater H which heats air supplied to the drum of the dryer and a motor P driving the timing mechanism.

Motor P drives shafts carrying cams (not shown) that actuate the various switches. The movable contacts of switches S1 and S2A and B are operated by a fast rotating cam to give the changes of direction of rotation of the motor M at the requisite time intervals.

Switches S3 and S4 are operated by a slowly rotating cam whose speed of rotation is related to the duration of a drying cycle. Switch S3 energises the heater H at the commencement of a drying cycle and de-energises it some 6—10 minutes before the end of the cycle to allow the contents of the drum to cool down before the drum stops rotating. Switch S4 controls the energisation of the timer motor of the timing mechanism which is switched on at the beginning of a drying cycle and switched off at the end of the cycle.

Switch S1 is also controlled by a slow cam but in a manner such that the slow cam over-rides the fast cam at the end of a drying cycle to ensure that the motor M is de-energised at the end of the drying cycle. The over-ride can be arranged in any one of a number of different ways, for example the slow cam may be so contoured as to disengage the moving contact of switch S1 from the fast cam at the instant of over-ride.

A slight difference in the instant of operation of switches S1 and S4 is required to ensure that at the end of a cycle switch S1 is turned off by the slow cam before S4 is turned off. The times of closure of the switches S1, S2A, S2B, S3 and S4 are shown in Fig. 2 as heavy sections of respective lines labelled with the references used for the switches in Fig. 1. The time axis is horizontal in Fig. 2.

As can be seen in Fig. 2, the switches S2A and S2B are operated in unison the movable contacts of which change from being connected to the contacts L to being connected to contacts R at substantially equal intervals of time. The operation of the switch S1 relative to that of switches S2A and B is such that the switch S1 closes whilst the moving contacts of switches S2A and S2B are in contact with fixed contacts L so that the motor starts to rotate to the left, say. When the motor has been running for about one minute, the switches S2A and B change over and shortly afterwards the switch S1 opens allowing the motor M to slow down. After a time delay sufficient to allow the motor to come to rest, or almost so, the switch S1 closes again but this time the motor M is started in the opposite direction because the starting winding is now energised in the opposite sense. This cycle of switch operations and starting and stopping of the motor continues for the duration of the drying cycle, that is to say until the articles in the drum are considered to be sufficiently dry.

In Fig. 2, actuations of switch S1 are shown twice, the breaks in the lower lines being those caused by the first cam.

To initiate a drying cycle, a user sets the timer (not shown) to a desired cycle duration and, in so doing, energises the timer motor P, switches S1, S3 and S4 close and the heater and the motor M are energised. It is, of course, possible to employ a "start" button operation of which has the same effect.

The start button alternative may be used in tumbler dryers in which the duration of the drying cycle is controlled automatically by temperature sensors responsive to the temperature of air leaving the drum or in some other way.

It will be appreciated from a consideration of Fig. 2 that the precise instant of changeover of the switches S2A and B is not critical because it can occur at any time that the motor is running at its full speed or close to it, energisation of the starting winding at this time being prevented by the starting relay SR of which the contacts are opened when the current through the main winding MW falls as the motor M approaches its normal running speed. The variation in the speed of the motor M and the closing of the contacts of the starting relay SR are also shown in Fig. 2.

Instead of a starting relay the motor M may be provided with a centrifugal switch which becomes open circuit when the motor speed is, say 80% of its full running speed. With such a switch the contacts would be connected in the same way as the contacts of the relay SR, but of course there would be no solenoid coil to be connected in series with the main winding MW. The operation of the circuit with a centrifugal switch instead of the starting relay SR is as described above, except that the contacts of the centrifugal switch will close as soon as the motor speed falls below 80% of its running speed; this will have no effect because the switch S1 is open at the time; and the starting winding will be energised when S1 is closed irrespective of whether there is a starting relay or a centrifugal switch.

Further, it is possible to employ separate cams to operate the different switches referred to above.

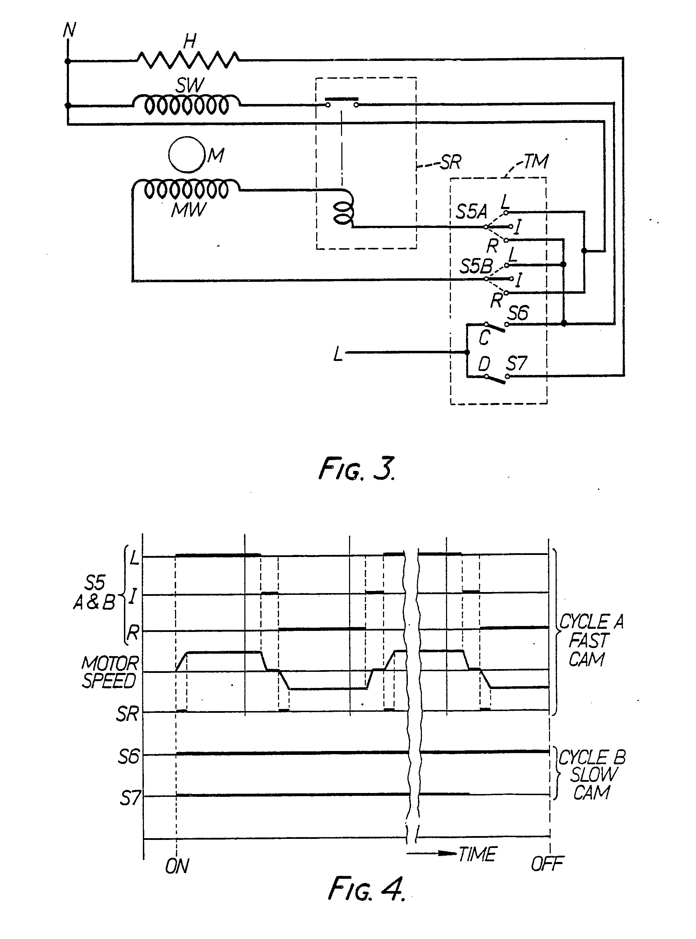

Fig. 3 is a circuit diagram of an alternative method of connecting the motor to an electricity supply. In Fig. 3 components identical with components of the circuit shown in Fig. 1 have been given the same reference letters as in Fig. 1. As in the case of the embodiment shown in Fig. 1, the starting winding SW is of conventional form.

The timer motor P is not shown in Fig. 3 but it will be understood that it is similar to the motor P described above with reference to Fig. 2. Energisation of the motor P in the Fig. 3 embodiment is controlled in a similar manner to that of the motor P in the Fig. 2 embodiment.

Thus, the starting winding SW of the split phase induction motor M is connected via the contacts of the starting relay SR and a main control switch S6 between A.C. power supply terminals L and N. Connected across those terminals L and N in parallel with the start winding SW is the heater H energisation of which is controlled by a switch S7.

Reversal of the direction of rotation of the motor M is effected by reversing the sense of connection of the main winding MW. The main winding MW is connected, in series with the solenoid coil of the starting relay, between the moving contacts of switches S5A and S5B. Both of these switches have two fixed contacts L, R connected as shown, and a central unconnected position between the fixed contacts L, R.

The switches S5A and S5B are actuated by the timing mechanism shown diagrammatically by the dotted rectangle TM. The motor of the timing mechanism has an output shaft on which is mounted a cam contoured to provide the operation of the moving contacts of the switches S5A and S5B to give the changes of direction of the motor M at the requisite time intervals. The contouring of the cam also ensures that the moving contacts rest in the intermediate position for a period of about 1—2 seconds long enough to allow the motor M to come substantially to rest.

The cam just referred to is a fast rotating cam similar to those described above.

Switch S6 is a main switch controlling energisation of the motor and is operated by a slowly rotating cam, operation being related to the duration of a drying cycle and this is set by a user. Switch S6 also controls energisation of the motor of the timing mechanism.

Switch S7 controls energisation of the heater H and is actuated by another slowly rotating cam of the timing mechanism in a manner similar to that described above, i.e. the heater is energised at the commencement of a drying cycle and is deenergized some 6—10 minutes before the end of the cycle.

As can be seen from Fig. 4, which shows the times of closure in the contacts of the switches of the embodiment shown in Fig. 3, the moving contacts of switches S5A and S5B are operated in unison. The moving contacts are connected to the fixed contacts L, R for equal periods of time whilst the dwell in the intermediate position is 1.5 seconds.

When a user sets the timer at the commencement of a drying cycle, the timer motor is energised and the switches S6 and S7 close thereby energising both starting and run windings SW and MW (the contacts of the starting relay SR being closed at this time), and the heater H.

When the motor M reaches about 80% of its full running speed, the solenoid coil of relay SR is de-energised as the current through the main winding MW falls and the starting winding is de-energised.

At the appropriate time, the moving contacts of switches S5A and S5B move off fixed contacts L, pause for a period of about 1.5 seconds in the intermediate position to allow the motor M to slow down and come substantially to rest and then move to fixed contacts R. As the motor M comes to rest, the contacts of the starting relay close so allowing energisation of the starting winding but as now the sense of connection of the main winding relative to the starting winding has been reversed, the motor M will rotate in the opposite direction.

The cycle of switch operations continues for the duration of the drying cycle.

As explained above, it is possible to use a "start" button to initiate the drying cycle instead of setting the timing mechanism.

It will be appreciated that whilst the moving contacts of the switches S5A and S5B are in their intermediate positions, the current flow through the heater H increases and the air flow over the latter ceases but because of the short time that the contacts are in the intermediate positions this does not result in overheating. However, if a longer duration of stay in the intermediate position is required to ensure that the motor M comes substantially to rest, it may be necessary to de-energise the heater for that duration to avoid the risk of overheating. That can be achieved by another switch in series connection between switch S7 and heater H that is actuated synchronously with switches S5A and S5B being open circuited as the moving contacts of the latter switches move from contacts L to contacts R.

As explained above, the embodiment of Fig. 3 may use a centrifugally operated switch in place of the starting relay SR.

In addition, the duration of the drying cycle may be controlled in other ways than by means of a timer as is explained above.

## Claims

1. A tumbler dryer including a rotatable drum which is driven in opposite rotational directions alternately for periods of time by a split phase induction motor (M) having a main winding (MW) and a starting winding (SW) with a starting switch (SR) having contacts for connecting the starting winding (SW) in parallel with the main winding (MW) and disconnecting it only when the motor (M) approaches its full running speed; switching means (S2A, S2B, Fig. 1; S5A, B, Fig. 3) for reversing the sense of connection of one of said windings relatively to the other, and means (S1, Fig. 1; S5A, S5B, Fig. 3) for de-energising the main winding (MW) between reversals of the direction of connection for a period of time sufficient for the motor to come substantially to rest, characterised in that the switching means and the de-energising means are both operable by a timing mechanism (TM) driven independently of the drum for determining the said periods of time for which the drum is driven in opposite rotational directions alternately.

2. A tumbler dryer as claimed in claim 1 in which the de-energising means comprises an ON/OFF switch (S1) operable by the timing mechanism, and in which the switching means (S2A, S2B) is operable to effect reversal of the sense of the connection of the starting winding (SW).

3. A tumbler dryer as claimed in claim 2 in which the timing mechanism is such that the ON/OFF switch (S1) is operable to an "OFF" position while the motor (M) is running and in which reversal of the sense of connection of the starting winding (SW) occurs whilst the motor (M) is running.

4. A tumbler dryer as claimed in claim 1 in which the switching means (S5A, S5B) is operable to reverse the sense of connection of the main winding (M) and in which the means comprises an arrangement for introducing a time delay between reversals of the direction of connection.

5. A tumbler dryer including a rotatable drum which, in use is driven in opposite directions alternately for periods of time by a split phase induction motor (M) having a main winding (MW) and a starting winding (SW) with a starting switch (SR) having contacts for connecting the starting winding (SW) in parallel with the main winding (MW) and disconnecting it only when the motor (M) approaches full speed; first switching means (SI) which permits energisation of the motor (M) during periods of time that the motor (M) is required to run and prevents energisation during intervals between those periods, the intervals being long enough to allow the motor to come substantially to rest, and second switching means (S2A, S2B) which in operation reverses the sense of connection of one of the windings relatively to the other in such a manner that the motor (M) is started in opposite directions alternately, characterised in that the first and second switching means are both operable by a timing mechanism (TM) driven independently of the drum for determining the said periods of time for which the drum is driven in opposite rotational directions alternately.

6. A tumbler dryer as claimed in claim 5 in which the second switching means (S2A, S2B) is operable to reverse the sense of connection of the starting winding (SW) and effects such reversal whilst the motor (M) is running at full speed.

7. A tumbler dryer as claimed in claim 5 or 6 in which the timing mechanism (TM) includes cams for operating the first and second switching means.

8. A tumbler dryer as claimed in claim 1 in which the switching means and the de-energising means comprises a multi-position switch (S5A, S5B) having a first position (L) in which the main winding (MW) is connected in one sense with the starting winding (SW), a second position (R) in which the main winding (MW) is connected in the reverse sense with the starting winding (SW), and an intermediate position (I) in which the main winding (MW) is disconnected from the starting winding (SW) and energisation of the main winding (MW) prevented.

9. A tumbler dryer as claimed in any one of claims 1 to 4 and 8, and in which there is a further ON/OFF switch (56) operable by the timing mechanism (TM) to permit energisation of the motor (M) at the commencement of a tumble drying operation and to terminate energisation thereof at the end of that operation.

10. A tumbler dryer as claimed in any one of the preceding claims and which includes a heater (H) for heating air prior to the air entering the drum and in which energisation and de-energisation of the heater is controlled by an ON/OFF switch (S3, Fig. 1; S7, Fig. 3) operable by the timing mechanism (TM) to energise the heater at the commencement of a tumble drying operation and to de-energise the heater not later than the end of the operation.

## Patentansprüche

1. Ein Trommeltrockner, umfassend eine drehbare, Trommel, die zeitperiodenweise alternierend in entgegengesetzten Drehrichtungen von einem Spaltphaseninduktionsmotor (M) angetrieben ist, der eine Hauptwicklung (MW) und eine Anlaufwicklung (SW) mit einem Anlaufschalter (SR) aufweist, der Kontakte für das Parallelliegen der Anlaufwicklung zur Hauptwicklung (MW) aufweist und sie nur dann abschaltet, wenn der Motor (M) sich seiner vollen Laufdrehzahl nähert; Schaltmittel (S2A, S2B, Fig. 1; S5A, B, Fig. 3) für die Umkehrung des Anschlußsinnes einer der genannten Wicklungen relativ zu der anderen und Mittels (S1, Fig. 1; S5B, Fig. 3) für das Entregen der Hauptwicklung (MW) zwischen Umkehrungen der Anschlußrichtung während einer hinreichenden Zeitperiode, daß der Motor im wesentlichen zum Stillstand kommt, dadurch gekennzeichnet, daß die Schaltmittel und die Entregungsmittel beide durch einen Zeitgebermechanismus (TM) betätigbar sind, der unabhängig von der Trommel angetrieben ist zum Bestimmen der genannten Zeitperioden, während welchen die Trommel in entgegengesetzten Drehrichtungen alternierend angetrieben wird.

2. Ein Trommeltrockner nach Anspruch 1, bei dem die Entregungsmittel einen EIN/AUS-Schalter (S1) umfassen, betätigbar durch den Zeitgebermechanismus und bei welchem die Schaltmittel (S2A, S2B) betätigbar sind zum Bewirken einer Umkehr der Anschlußrichtung der Anlaufwicklung (SW).

3. Ein Trommeltrockner nach Anspruch 2, bei dem der Zeitgebermechanismus derart ist, daß der EIN/AUS-Schalter (S1) in eine "AUS"-Position betätigbar ist, während der Motor (M) läuft und bei welchem die Umkehr der Anschlußrichtung der Anlaufwicklung (SW) erfolgt während der Motor (M) läuft.

4. Ein Trommeltrockner nach Anspruch 1, bei welchem die Schaltmittel (S5A, S5B) betätigbar sind zum Umkehren der Anschlußrichtung der Hauptwicklung (M) und bei welchem die Mittel eine Anordnung umfassen für die Einführung einer zeitlichen Verzögerung zwischen Umkehrungen der Anschlußrichtung.

5. Ein Trommeltrockner, umfassend eine drehbare Trommel, die im Betrieb in entgegengesetzten Richtungen zeitperiodenweise alternierend von einem Spaltphaseninduktionsmotor (M) angetrieben wird, der eine Hauptwicklung (MW) und eine Anlaufwicklung (SW) mit einem Anlaufschalter (SR) aufweist, der Kontakte für das Anschließen der Anlaufwicklung (SW) parallel zur Hauptwicklung (MW) und zu ihrem Abtrennen nur dann, wenn der Motor (M) sich seiner vollen Drehzahl nähert, aufweist, erste Schaltmittel (SI), die die Erregung des Motors (M) während Zeitperioden ermöglicht, die der Motor (M) zum Laufen benötigt und die Erregung während Intervallen zwischen jenen Perioden unterdrückt, welche Intervalle lang genug sind, um dem Motor zu ermöglichen, im wesentlichen zum Stillstand zu kommen, und zweite Schaltmittel (S2A, S2B), die im Betrieb die Anschlußrichtung einer der Wicklungen relativ zur anderen derart umkehrt, daß der Motor (M) alternierend in entgegengesetzten Richtungen anläuft, dadurch gekennzeichnet, daß die ersten und zweiten Schaltmittel beide von einem Zeitgebermechanismus (TM) betätigbar sind, der unabhängig von der Trommel angetrieben ist für das Bestimmen der genannten Zeitperioden, während welcher die Trommel alternierend in entgegengesetzten Drehrichtungen angetrieben wird.

6. Ein Trommeltrockner nach Anspruch 5, bei dem die zweiten Schaltmittel betätigbar sind zum Umkehren der Anschlußrichtung der Anlaufwicklung (SW) und diese Umkehr durchführen, während der Motor (M) bei voller Drehzahl läuft.

7. Ein Trommeltrockner nach Anspruch 5 oder 6, bei welchem der Zeitgebermechanismus (TM) Nocken umfaßt für die Betätigung der ersten und zweiten Schaltmittel.

8. Ein Trommeltrockner nach Anspruch 1, bei welchem die Schaltmittel und die Entregungsmittel einen Mehrpositionsschalter (S5A, S5B) umfassen mit einer ersten Position (L), in der die Hauptwicklung (MW) in einer Richtung mit der Anlaufwicklung (SW) angeschlossen ist, eine zweite Position (R), in der die Hauptwicklung (MW) in entgegengesetzter Richtung mit der Anlaufwicklung (SW) angeschlossen ist und eine Zwischenposition (I), in der die Hauptwicklung (MW) von der Anlaufwicklung (SW) abgetrennt ist und die Erregung der Hauptwicklung (MW) unterdrückt ist.

9. Ein Trommeltrockner nach einem der Ansprüche 1 bis 4 und 8 und bei dem ein weiterer EIN/AUS-Schalter (56) von dem Zeitgebermechanismus (TM) betätigbar ist zum Ermöglichen der Erregung des Motors (M) bei Beginn eines Trommeltrockenarbeitsganges und zum Beenden der Erregung beim Ende dieses Arbeitsganges.

10. Ein Trommeltrockner nach einem der vorangehenden Ansprüche, der ein Heizregister (H) aufweist für das Erhitzen von Luft, bevor die Luft in die Trommel eintritt und bei dem die Erregung und Entregung des Heizregisters durch einen EIN/AUS-Schalter (S3, Fig. 1; S7, Fig. 3) gesteuert wird, der von dem Zeitgebermechanismus (TM) betätigbar ist zum Erregen des Heizregisters bei Beginn eines Trommeltrockenarbeitsganges und zum Entregen des Heizregisters nicht später als bei Beendigung des Arbeitsganges.

## Revendications

1. Un sécheur-agitateur comportant un tambour rotatif qui est entraîné dans des sens opposés de rotation alternativement pendant des périodes de temps par un moteur à induction à enroulement auxiliaire (M) comportant un enroulement principal (MW) et un enroulement de démarrage (SW) avec un commutateur de démarrage (SR) pourvu de contacts pour connecter l'enroulement de démarrage (SW) en parallèle avec l'enroulement principal (MW) et pour le déconnecter seulement quand le moteur (M) se rapproche de sa vitesse à plein régime; un moyen de commutation (S2A, S2B, Fig. 1; S5A, B, Fig. 3) pour inverser le sens de connexion d'un desdits enroulements par rapport à l'autre, et un moyen (S1, Fig. 1; S5A, S5B, Fig. 3) pour désexciter l'enroulement principal (MW) entre des inversions du sens de connexion pendant une période de temps suffisante pour que le moteur s'arrête pratiquement, caractérisé en ce que le moyen de commutation et le moyen de désexcitation peuvent tous deux être actionnés par un mécanisme de synchronisation (TM) entraîné indépendamment du tambour pour déterminer lesdites périodes de temps pendant lesquelles le tambour est entraîné alternativement dans des sens de rotation opposés.

2. Un sécheur-agitateur tel que revendiqué dans la revendication 1, où le moyen de désexcitation comprend un commutateur MARCHE/ARRET (S1) pouvant être actionné par le mécanisme de synchronisation et où le moyen de commutation (S2A, S2B) peut être actionné pour produire une inversion du sens de connexion de l'enroulement de démarrage (SW).

3. Un sécheur-agitateur tel que revendiqué dans la revendication 2, où le mécanisme de synchronisation est tel que le commutateur MARCHE/ARRET (S1) puisse être actionné dans une position "ARRET" pendant que le moteur (M) est en marche et où une inversion du sens de connexion de l'enroulement de démarrage (SW) se produit pendant que le moteur (M) est en marche.

4. Un sécheur-agitateur tel que revendiqué dans la revendication 1, où le moyen de commutation (S5A, S5B) peut être actionné pour inverser le sens de connexion de l'enroulement principal (M) et où le moyen comprend un agencement pour introduire un retard temporel entre des inversions du sens de connexion.

5. Un sécheur-agitateur comprenant un tambour rotatif, qui, en service, est entraîné dans des sens opposés alternativement pendant des périodes de temps par un moteur à induction à enroulement auxiliaire (M) comportant un enroulement principal (MW) et un enroulement de démarrage (SW) avec un commutateur de démarrage (SR) pourvu de contacts pour connecter l'enroulement de démarrage (SW) en parallèle avec l'enroulement principal (MW) et pour le déconnecter seulement quand le moteur (M) se rapproche de la vitesse de plein régime; un premier moyen de commutation (SI) qui permet une excitation du moteur (M) pendant des périodes de temps où le moteur (M) doit fonctionner et qui empêche une excitation pendant des intervalles entre lesdites périodes, les intervalles étant suffisamment longs pour permettre au moteur de s'arrêter pratiquement, et un second moyen de commutation (S2A, S2B) qui, en fonctionnement, inverse le sens de connexion d'un des enroulements par rapport à l'autre d'une manière telle que le moteur (M) démarre alternativement dans des directions opposées, caractérisé en ce que le premier et le second moyen de commutation peuvent tous deux être actionnés par un mécanisme de synchronisation (TM) entraîné indépendamment du tambour pour déterminer lesdites périodes de temps pendant lesquelles le tambour est entraîné alternativement dans des sens de rotation opposés.

6. Un sécheur-agitateur tel que revendiqué dans la revendication 5, où le second moyen de commutation (S2A, S2B) peut fonctionner pour inverser le sens de connexion de l'enroulement de démarrage (SW) et pour effectuer cette inversion pendant que le moteur (M) fonctionne à pleine vitesse.

7. Un sécheur-agitateur tel que revendiqué dans la revendication 5 ou 6, dans lequel le mécanisme de synchronisation (TM) comprend des cames d'actionnement des premier et second moyens de commutation.

8. Un sécheur-agitateur tel que revendiqué dans la revendication 1, dans lequel le moyen de commutation et le moyen de désexcitation comprennent un commutateur à positions multiples (S5A, S5B) comportant une première position (L) dans laquelle l'enroulement principal (MW) est connecté dans un sens avec l'enroulement de démarrage (SW), une seconde position (R) dans laquelle l'enroulement principal (MW) est connecté dans le sens inverse avec l'enroulement de démarrage (SW), et une position intermédiaire (I) dans laquelle l'enroulement principal (MW) est déconnecté de l'enroulement de démarrage (SW) et une excitation de l'enroulement principal (MW) est empêchée.

9. Un sécheur-agitateur tel que revendiqué dans l'une quelconque des revendications 1 à 4, et 8, et dans lequel il est prévu un autre commutateur MARCHE/ARRET (56) pouvant être actionné par le mécanisme de synchronisation (TM) afin de permettre une excitation du moteur (M) au début d'une opération de séchage-agitation et pour arrêter son excitation à la fin de ladite opération.

10. Un sécheur-agitateur tel que revendiqué dans l'une quelconque des revendications précédentes et qui comprend un réchauffeur (H) pour réchauffer l'air avant que cet air pénètre dans le tambour et dans lequel une excitation et une désexcitation du réchauffeur sont commandées par un commutateur MARCHE/ARRET (S3, Fig. 1; S7; Fig. 3) pouvant être actionné par le mécanisme de synchronisation (TM) afin d'exciter le réchauffeur au début d'une opération de séchage-agitation et pour désexciter le réchauffeur par plus tard que la fin de cette opération.

FIG. 1.

FIG. 2.

FIG. 3.

FIG. 4.